(19) Europäisches Patentamt
European Patent Office
Office européen des brevets

(11) **EP 4 553 112 A1**

(12) **EUROPEAN PATENT APPLICATION**
published in accordance with Art. 153(4) EPC

(43) Date of publication:
**14.05.2025 Bulletin 2025/20**

(21) Application number: **23835540.8**

(22) Date of filing: **04.07.2023**

(51) International Patent Classification (IPC):
*C08L 15/00* (2006.01)    *B60C 1/00* (2006.01)
*C08L 9/06* (2006.01)    *C08L 25/02* (2006.01)
*C08L 65/00* (2006.01)

(52) Cooperative Patent Classification (CPC):
B60C 1/00; C08L 9/06; C08L 15/00; C08L 25/02;
C08L 65/00

(86) International application number:
**PCT/JP2023/024828**

(87) International publication number:
**WO 2024/010009 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.07.2022 JP 2022107988**

(71) Applicant: BRIDGESTONE CORPORATION
Chuo-ku
**Tokyo 104-8340 (JP)**

(72) Inventors:
• **KOSAI Tomoyuki**
**Tokyo 104-8340 (JP)**
• **KUMAKI Kentaro**
**Tokyo 104-8340 (JP)**
• **YAGI Reiko**
**Tokyo 104-8340 (JP)**

(74) Representative: **Marks & Clerk LLP**
**15 Fetter Lane**
**London EC4A 1BW (GB)**

(54) **POLYMER COMPOSITION, PRODUCTION METHOD THEREFOR, RUBBER COMPOSITION, AND TIRE**

(57) An object of the present disclosure is to provide a polymer composition having excellent cold flow resistance, a production method therefor, a rubber composition including the polymer composition, and a tire using the rubber composition. The solution is a polymer composition comprising a diene-based polymer having a number-average molecular weight of 500,000 g/mol or more and a resin having a %H Ar value of 20 % or more and a softening point of 110 °C or higher, in which a content of the resin is 20 parts by mass or more with respect to 100 parts by mass of the diene-based polymer.

EP 4 553 112 A1

**Description**

TECHNICAL FIELD

The present disclosure relates to a polymer composition and a production method therefor, a rubber composition, and a tire.

BACKGROUND

Polymers used in tire manufacturing can be relatively high molecular weight to meet various performance requirements. In this case, oil-added polymers with added processing oil are sometimes used to improve processability. In addition, polymers with added resin are sometimes used to improve both the gripping performance of the tire and its processability.
For example, JP2020-528487A (PTL 1) discloses a technique in which the adhesiveness of composition is reduced by using a polymer to which a specific resin is added.

CITATION LIST

Patent Literature

PTL 1: JP2020-528487A

SUMMARY

(Technical Problem)

However, polymers with added oil or resin, such as those exemplified in PTL 1, tend to cause significant cold flow phenomena, and improvements from this perspective have been sought.
It could thus be helpful to provide a polymer composition with excellent cold flow resistance, a production method therefor, a rubber composition containing the polymer composition, and a tire using the rubber composition.

(Solution to Problem)

<1> A polymer composition comprising:

a diene-based polymer having a number-average molecular weight of 500,000 g/mol or more and
a resin having a %H Ar value of 20 % or more and a softening point of 110 °C or higher, wherein
a content of the resin is 20 parts by mass or more with respect to 100 parts by mass of the diene-based polymer.

<2> The polymer composition according to <1>, wherein the diene-based polymer comprises styrene-butadiene copolymer rubber.
<3> The polymer composition according to <1> or <2>, wherein a glass transition temperature of the diene-based polymer is -30 °C or lower.
<4> The polymer composition according to any one of <1> to <3>, wherein the diene-based polymer is modified.
<5> The polymer composition according to any one of <1> to <4>, wherein the resin includes at least one selected from the group consisting of $C_9$-based resin and terpene-aromatic compound-based resin.
<6> The polymer composition according to <5>, wherein the resin includes at least one selected from the group consisting of homopolymer-based resin of styrenic monomer and terpene phenolic resin.
<7> The polymer composition according to any one of <1> to <6>, wherein a glass transition temperature of the resin is 65 °C or higher.
<8> The polymer composition according to any one of <1> to <7>, wherein a number-average molecular weight of the resin is 300 g/mol or more.
<9> The polymer composition according to <3>, wherein a glass transition temperature of the diene-based polymer is -60 °C or lower.
<10> The polymer composition according to any one of <1> to <9>, wherein an oil content is 0 mass%.
<11> A method for producing a polymer composition comprising:

mixing a diene-based polymer having a number-average molecular weight of 500,000 g/mol or more and a resin having a %H Ar value of 20 % or more and a softening point of 110 °C or higher, wherein a compounding amount of the resin is 20 parts by mass or more with respect to 100 parts by mass of the diene-based polymer.

<12> A rubber composition comprising the polymer composition according to any one of <1> to <10>.
<13> A tire using the rubber composition according to <12>.

(Advantageous Effect)

The present disclosure can provide a polymer composition with excellent cold flow resistance, a production method therefor, a rubber composition containing the polymer composition, and a tire using the rubber composition.

DETAILED DESCRIPTION

<Polymer composition>

The polymer composition in the present disclosure contains a diene-based polymer having a number-average molecular weight of 500,000 g/mol or more and a resin having a %H Ar value of 20 % or more and a softening point of 110 °C or higher, in which a content of the resin is 20 parts by mass or more with respect to 100 parts by mass of the diene-based polymer.
Hereinafter, the "diene-based polymer having a number-average molecular weight of 500,000 g/mol or more" may be referred to as "diene-based polymer in the present disclosure" and the "resin having a %H Ar value of 20 % or more and a softening point of 110 °C or higher" as "resin in the present disclosure".
Traditionally, diene-based polymers with rigidity, such as oil-extended styrene-butadiene copolymer rubber (oil-extended SBR), which have a number-average molecular weight of 500,000 g/mol or more, are sometimes mixed with oil, etc. as a plasticizer in order to improve the processability of the polymers. However, when the diene-based polymers mixed with oil, etc., are processed into sheets or blocks and stacked for storage, the diene-based polymers are easily deformed and flow (cold flow phenomenon).
In contrast, the polymer composition of the present disclosure has excellent cold flow resistance. The reason for this is not known but is assumed to be due to the following reasons.
The resin in the present disclosure has a %H Ar value of 20 % or more and a softening point of 110 °C or higher, and therefore has low compatibility with the diene-based polymer having a number-average molecular weight of 500,000 g/mol or more and has rigidity. Therefore, the resin in the present disclosure is considered to act like a filler that is difficult to relax in the diene-based polymer in the present disclosure. As a result, it is believed that deformation of the polymer composition can be suppressed, and the cold flow phenomenon can be inhibited.
The following is a detailed description of the components of the polymer composition.

[Diene-based polymer]

The diene-based polymer in the present disclosure has a number-average molecular weight of 500,000 g/mol or more.
Hereafter, the last three digits of the molecular weight ",000" are denoted by "k", and 500,000 may be described as "500k".
In the present disclosure, the number-average molecular weight (Mn) means the polystyrene-equivalent number-average molecular weight measured by gel permeation chromatography (GPC).
The number-average molecular weight of the diene-based polymer is preferably greater than 500,000 (500k) g/mol, more preferably greater than 1,000,000 (1000k) g/mol, and even more preferably greater than 1,250,000 (1250k) g/mol. The number-average molecular weight of the diene-based polymer is preferably 3,000,000 (3000k) g/mol or less, more preferably 2,500,000 (2500k) g/mol or less, and even more preferably 2,000,000 (2000k) g/mol or less.
From the viewpoint of further improving the balance between rolling resistance and WET performance of tires obtained from the rubber composition containing the polymer composition of the present disclosure, the glass transition temperature (Tg) of the diene-based polymer is preferably -30 °C or lower, more preferably -45 °C or lower, and even more preferably -60 °C or lower. The glass transition temperature (Tg) of the diene-based polymer is preferably -80 °C or higher.
The Tg of diene-based polymer can be measured by differential scanning calorimeter (DSC).
The diene-based polymer is preferably modified. In other words, the diene-based polymer preferably has a modified functional group in the molecular chain.
By modifying the diene-based polymer, when the rubber composition containing the polymer composition of the

EP 4 553 112 A1

present disclosure contains a filler, the filler dispersibility is improved, and a vulcanized rubber with low heat buildup can be obtained.

The diene-based polymer can be modified with a modifier such as, for example, an alkoxysilane compound, an amine compound, or a tin compound. Only one modifier may be used, or two or more may be used. By using these modifiers, the diene-based polymer can have a modified functional group such as an alkoxysilane group; a primary, secondary, or tertiary amino group, or a tin atom-containing group, in the molecular chain. Furthermore, the primary and secondary amino groups may be protected by hydrolyzable protecting groups. The diene-based polymer may have only one or two or more modified functional groups. Among these, the diene-based polymer preferably has at least an alkoxysilane group in the molecular chain, and more preferably has an amino group in addition.

Examples of the diene-based polymer include polyisoprene rubber (IR), styrene-butadiene copolymer rubber (SBR), butadiene polymer (BR), ethylene propylene diene rubber (EPDM), chloroprene rubber (CR), halogenated butyl rubber, acrylonitrile-butadiene rubber (NBR). SBR, BR and IR may also be hydrogenated.

Only one or two or more diene-based polymers may be used.

Of the above, the diene-based polymer in the present disclosure preferably contains styrene-butadiene copolymer rubber (SBR) and more preferably consists of styrene-butadiene copolymer rubber (SBR).

The vinyl bond content (Vi) in the diene compound portion of the diene-based polymer is preferably 10 mol% to 70 mol%, more preferably 15 mol% to 60 mol%, even more preferably 20 mol% to 50 mol% from the viewpoint of the balance between rolling resistance and WET performance of tires obtained from the rubber composition containing the polymer composition of the present disclosure.

The vinyl bond content of the diene-based polymer can be measured by $^1$H-NMR spectrum.

When modified or unmodified SBR is used as the diene-based polymer, the bound styrene content (St) of the modified or unmodified SBR is preferably 3 mol% to 25 mol%, more preferably 4 mol% to 22 mol%, and even more preferably 5 mol% to 18 mol% from the viewpoint of low loss property and WET performance of tires obtained from the rubber composition containing the polymer composition of the present disclosure.

The bound styrene content of modified or unmodified SBR can be measured by $^1$H-NMR spectrum.

[Resin]

The polymer composition contains a resin having a %H Ar value of 20 % or more and a softening point of 110 °C or higher (resin in the present disclosure), in which a content of the resin in the present disclosure in the polymer composition is 20 mass parts or more to 100 mass parts of the diene-based polymer.

If the content of the resin in the present disclosure in the polymer composition is less than 20 parts by mass with respect to 100 parts by mass of the diene-based polymer, the cold flow phenomenon of the polymer composition cannot be suppressed. From the viewpoint of more improving the cold flow resistance of the polymer composition, the content of the resin in the present disclosure in the polymer composition is preferably 30 parts by mass or more, more preferably 35 parts by mass or more, and even more preferably 50 parts by mass or more with respect to 100 parts by mass of the diene-based polymer.

The content of the resin in the present disclosure in the polymer composition is preferably 100 parts by mass or less, more preferably 80 parts by mass or less, and even more preferably 70 parts by mass or less with respect to 100 parts by mass of the diene-based polymer.

(%H Ar value)

The %H Ar value represents the amount [%] of hydrogen atoms (H) bonded to an aromatic ring (Ar) in a compound and expresses the degree of polarity in terms of the structure of the resin, which can be determined using the formula below when the hydrogen atoms in the resin are divided into those of aromatic and non-aromatic origin.

%H Ar value = [amount of hydrogen atoms of aromatic origin / (amount of hydrogen atoms of aromatic origin + amount of hydrogen atoms of non-aromatic origin)] $\times$ 100

When the %H Ar value is large, polarity is large and compatibility with the diene-based polymer having a number-average molecular weight of 500,000 g/mol or more is small. When the %H Ar value is small, polarity is low and compatibility with the diene-based polymer having a number-average molecular weight of 500,000 g/mol or more is high.

The resin in the present disclosure has a %H Ar value of 20 % or more, and therefore has low compatibility with the diene-based polymer having a number-average molecular weight of 500,000 g/mol or more.

A higher %H Ar value of the resin in the present disclosure represents a smaller and better compatibility with the diene-based polymer, and the value is preferably 25 % or more and more preferably 30 % or more. The %H Ar value of the

4

resin in the present disclosure is preferably 62.5 % or less.

The %H Ar value can be measured as follows.

20 mg $\pm$ 1 mg of the resin is dissolved in $CDCl_3$ with deuteration ratio of 100 % (0.7 mL) and $^1$H NMR is measured at 25 °C with 32 scans using NMR of 500 MHz manufactured by Bruker. The % H Ar is calculated as [(integral value from 8.5 ppm to 6.2 ppm) / (integral value from 8.5 ppm to 0 ppm)] $\times$ 100 when the signal of the internal standard $[Si(CH_3)_3]O$ is set to 0 ppm.

The solubility parameter (SP) value is sometimes used as a property to express the compatibility between the polymer and the resin, but the SP value cannot be calculated when the molecular structure of the resin is unknown. On the other hand, the %H Ar value is an indicator of the aromatic component, which is important for the compatibility of the diene-based polymer with the resin and can express compatibility even when molecular structural details are unknown.

(Softening point)

The resin in the present disclosure has a softening point (Ts) of 110 °C or higher.

The softening point of the resin in the present disclosure is 110 ° C or higher, which can impart rigidity to the polymer composition, suppress deformation thereof, and the cold flow phenomenon.

The softening point of the resin in the present disclosure is preferably 115 °C or higher, and more preferably 120 °C or higher. Further, from the viewpoint of processability of the polymer composition, the softening point of the resin in the present disclosure is preferably 150 °C or lower, more preferably 145 °C or lower, and even more preferably 140 °C or lower.

The softening point can be measured by the method in accordance with JIS-K2207-1996 (ring-and-ball method).

The resin in the present disclosure is not restricted as long as the %H Ar value is 20 % or more and the softening point is 110 °C or higher, and examples thereof include $C_5$-$C_9$-based resin, $C_9$-based resin, terpene-aromatic compound-based resin, DCPD-aromatic compound-based resin.

Only one type of resin may be used, or two or more may be used.

Among them, from the viewpoint of achieving both %H Ar value and softening point, $C_9$-based resin and terpene-aromatic compound-based resin are preferred and homopolymer-based resin of styrenic monomer and terpene phenolic resin are preferred.

The $C_9$-based resin refers to a solid polymer obtained by polymerizing a $C_9$ fraction using a Friedel-Crafts catalyst such as $AlCl_3$ or $BF_3$.

Examples of the $C_9$-based resin include a (co)polymer including indene, $\alpha$-methylstyrene, vinyltoluene, and the like as main components. The $C_9$-based resin preferably includes homopolymer-based resin of styrenic monomer, such as polystyrene, $\alpha$-methylstyrene resin, vinyltoluene resin, $\alpha$-methylvinyltoluene resin. The homopolymer-based resin of styrenic monomer is preferably polystyrene and $\alpha$-methylstyrene resin.

A typical example of the terpene-aromatic compound-based resin is terpene-phenol resin. The terpene-phenol resin may be obtained through methods including causing terpenoids and various phenols to react with each other using a Friedel-Crafts catalyst, or further condensing the resultant with formalin. The terpenes of the raw material are not limited but are preferably monoterpene hydrocarbons such as $\alpha$-pinene and limonene, more preferably terpenes containing $\alpha$-pinene, and particularly preferably $\alpha$-pinene. Styrene or the like may be included in the framework.

From the viewpoint of further suppressing deformation of the polymer composition, the resin in the present disclosure preferably has a glass transition temperature of 65 °C or higher, and more preferably 70 °C or higher. Further, from the viewpoint of cold flow resistance, the glass transition temperature of the resin in the present disclosure is preferably 100 °C or lower, more preferably 97 °C or lower, and even more preferably 93 °C or lower.

The glass transition temperature of the resin in the present disclosure can be measured by differential scanning calorimeter (DSC).

The resin in the present disclosure preferably has a number-average molecular weight (Mn) of 300 g/mol or more. When the resin in the present disclosure has a number-average molecular weight of 300 g/mol or more, the compatibility of the resin in the present disclosure with the diene-based polymer can be reduced.

The number-average molecular weight (Mn) of the resin in the present disclosure means the polystyrene-equivalent number-average molecular weight measured by gel permeation chromatography (GPC).

The number-average molecular weight of the resin in the present disclosure is more preferably 500 g/mol or more, and even more preferably 600 g/mol or more. The number-average molecular weight of the resin in the present disclosure is preferably 1000 g/mol or less, more preferably 950 g/mol or less, and even more preferably 900 g/mol or less.

From the viewpoint of compatibility with the diene-based polymer, the weight-average molecular weight (Mw) of the resin in the present disclosure is preferably 1000 g/mol to 2000 g/mol, more preferably 1200 g/mol to 1900 g/mol, and even more preferably 1400 g/mol to 1800 g/mol.

The weight-average molecular weight (Mw) means the polystyrene-equivalent weight-average molecular weight measured by gel permeation chromatography (GPC).

From the viewpoint of compatibility with the diene-based polymer, the molecular weight distribution (MWD) of the resin in the present disclosure is preferably 1.30 to 2.50, more preferably 1.40 to 2.40, and even more preferably 1.50 to 2.30.

The molecular weight distribution (MWD) of the resin in the present disclosure can be calculated from the ratio of weight-average molecular weight (Mw) to number-average molecular weight (Mn) (Mw/Mn).

As described above, when the polymer composition contains the diene-based polymer in the present disclosure and a given amount of the resin in the present disclosure, the glass transition temperature of the polymer composition can be increased and an incompatible high Tg domain can be created, thereby suppressing the cold flow phenomenon.

The glass transition temperature of polymer composition can be measured by differential scanning calorimeter (DSC).

The polymer composition may further contain components other than the diene-based polymer in the present disclosure and resin in the present disclosure but should not contain oil. In other words, the oil content in the polymer composition is preferably 0 mass%. The absence of oil in the polymer composition makes it easier to maintain the rigidity of the polymer composition.

Here, the oil means a softener that is liquid at 25 °C, and examples thereof include mineral oils such as process oil, vegetable oils, and the like.

From the viewpoint of further improving the cold flow resistance of the polymer composition, the polymer composition preferably consists of the diene-based polymer in the present disclosure and the resin in the present disclosure.

<Method for producing polymer composition>

A method for producing a polymer composition of the present disclosure comprises mixing a diene-based polymer having a number-average molecular weight of 500,000 g/mol or more and a resin having a %H Ar value of 20 % or more and a softening point of 110 °C or higher, in which a compounding amount of the resin is 20 parts by mass or more with respect to 100 parts by mass of the diene-based polymer.

As the diene-based polymer having a number-average molecular weight of 500,000 g/mol or more, the polymers described as the diene-based polymer in the present disclosure can be used, and the preferred aspect is also the same. In addition, examples of the resin having a %H Ar value of 20 % or more and a softening point of 110 °C or higher include the resins described as the resin in the present disclosure, and the preferred aspect is also the same.

From the viewpoint of further improving the cold flow resistance of the polymer composition produced, the compounding amount of the resin in the present disclosure is preferably 30 parts by mass or more, more preferably 35 parts by mass or more, even more preferably 50 parts by mass or more; and preferably 100 parts by mass or less, more preferably 80 parts by mass or less, and even more preferably 70 parts by mass or less, with respect to 100 parts by mass of the diene-based polymer.

<Rubber composition>

The rubber composition of the present disclosure comprises the polymer composition of the present disclosure.

The rubber composition of the present disclosure can contain diene-based rubber such as natural rubber, isoprene rubber and butadiene rubber as a rubber component. When the diene-based polymer in the present disclosure is a diene-based polymer, the polymer composition of the present disclosure can be used as the rubber component.

In addition to the polymer composition of the present disclosure, the rubber composition of the present disclosure can contain inorganic fillers such as carbon black and silica; softeners; age resistors; vulcanization accelerators such as sulfenamide vulcanization accelerators and thiuram vulcanization accelerators; stearic acid; zinc oxide; vulcanizing agents, etc.

<Tire>

The tire of the present disclosure is formed using the rubber composition of the present disclosure.

In accordance with the type or members of the tire to be applied, the tire may be obtained by molding an unvulcanized rubber composition followed by vulcanization or may be obtained by firstly preparing semi-vulcanized rubber from an unvulcanized rubber composition through a preparatory vulcanization process or the like, performing molding using the semi-vulcanized rubber, and then additionally performing main vulcanization. As a gas with which the tire is filled, an inert gas such as nitrogen, argon, or helium can be used as well as normal air or air whose oxygen partial pressure has been adjusted.

The tire of the present disclosure can be used as tires for passenger vehicles, light trucks, aircraft, and various other applications.

The various components (resin, rubber, various additives, etc.) contained in the polymer composition, rubber composition, and tire described herein may be partially or completely derived from fossil resources, biological resources such as plant resources, or recycled resources such as end-of-life tires. They may also be derived from mixtures of two or more of fossil resources, biological resources and recycled resources.

EXAMPLES

The presently disclosed techniques will be described in more detail below by way of examples, although these examples are intended for illustrative purposes only, and are not intended to limit the scope of the present disclosure in any way.

<Examples 1-4 and Comparative Examples 1-5>

(Diene-based polymer)

(1) Modified SBR: Modified styrene-butadiene copolymer rubber synthesized by synthetic method 1
(2) Unmodified SBR: Unmodified styrene-butadiene copolymer rubber synthesized by synthetic method 2

(Resin)

Oil: Trade name "JOMO PROCESS NC300BN" manufactured by JX Nippon Oil & Energy Corporation
C5C9-based resin: Trade name "Quintone G100B" manufactured by Zeon Corporation
C5-based resin: Trade name "Quintone A100" manufactured by Zeon Corporation
$\alpha$-methylstyrene resin: Trade name "Cleartack W 140" manufactured by Cray Valley
Homopolymer-based resin of styrenic monomer: Trade name "FTR8120" manufactured by Mitsui Chemicals Co., Ltd.

(Synthesis method 1)

Cyclohexane (200 g), butadiene/cyclohexane solution (25 mass%, 216 g), and styrene (6 g) were added to a glass bottle in an inert atmosphere and mixed, followed by the addition of 2,2-di-(2-tetrahydrofuryl)propane/cyclohexane solution (0.2 M, 0.18 mL) and n-butyllithium solution (1.6 M, 0.19 mL). The mixture was shaken gently at 50 °C for 4 hours, after which 0.3 mol of [N,N-bis(trimethylsilyl)-(3-amino-1-propyl)](methyl)(diethoxy)silane was added. It was then allowed to permeate for another 30 minutes at 50 °C. The reaction was then completely terminated by adding an appropriate amount of degassed isopropyl alcohol to the glass bottle, and to the resulting polymer cement was added 0.6 mL of an isopropyl alcohol solution of 2,6-di-t-butyl-p-cresol (5 mass%).

A portion of the polymer cement was taken out and the molecular properties of the polymer (modified SBR) were examined from the integral ratio of $^1$H-NMR. The bound styrene content (St) of the polymer was 11 % and the vinyl bond amount (Vi) of the butadiene portion was 47 mol%.

The number-average molecular weight of the polymer (modified SBR) was measured using gel permeation chromatography and found to be 612,000 (612k) g/mol from the viewpoint of monodisperse polystyrene.

The glass transition temperature (Tg) of the polymer (modified SBR) was measured by a differential scanning calorimeter (DSC) and found to be -54 °C.

(Synthesis method 2)

Cyclohexane (300 g), butadiene/cyclohexane solution (25 mass%, 108 g), and styrene (3 g) were added to a glass bottle in an inert atmosphere and mixed, followed by the addition of 2,2-di-(2-tetrahydrofuryl)propane/cyclohexane solution (0.2 M, 0.10 mL) and cyclohexane solution containing 1,3-bis(1-lithio-1,3-dimethylpentyl)benzene (0.15 M, 0.76 mL). The mixture was shaken gently at 50 °C for 10 hours, followed by the addition of an appropriate amount of degassed isopropyl alcohol to the glass bottle to thereby terminate the polymerization. To the resulting polymer cement was added 0.3 mL of an isopropyl alcohol solution of 2,6-di-t-butyl-p-cresol (5 mass%).

A portion of the polymer cement was taken out and the molecular properties of the polymer (unmodified SBR) were examined from the integral ratio of $^1$H-NMR. The bound styrene content (St) of the polymer was 11 % and the vinyl bond amount (Vi) of the butadiene portion was 45 mol%.

7

The number-average molecular weight of the polymer (unmodified SBR) was measured using gel permeation chromatography and found to be 1,140,000 (1140k) g/mol from the viewpoint of monodisperse polystyrene.

The glass transition temperature (Tg) of the polymer (unmodified SBR) was measured by a differential scanning calorimeter (DSC) and found to be -55 °C.

[Preparation of polymer composition]

The polymer cements obtained from synthesis methods 1 and 2 (containing 30 g of polymer) were mixed with THF solutions containing 15 g of various resins and shaken for 30 minutes. The resulting polymer cements were re-precipitated with isopropyl alcohol and dried under reduced pressure to obtain the polymer compositions.

In Tables 1 and 2, the compounding unit for each component is [part by mass].

For example, in Table 1, Example 2 means that it was prepared by mixing 100 parts by mass of modified SBR having bound styrene content (St) of 11 %, vinyl bond content (Vi) of the butadiene portion of 47 mol%, a number-average molecular weight (Mn) of 612,000 (612k) g/mol, and a glass transition temperature (Tg) of -54 °C; and 50 parts by mass of a homopolymer-based resin of styrenic monomer having a number-average molecular weight (Mn) of 886 g/mol, a weight-average molecular weight (Mw) of 1605 g/mol, a molecular weight distribution (MWD) of 1.81, %H Ar of 31.60 %, a glass transition temperature (Tg) of 70 °C, and a softening point (Ts) of 120 °C.

[Mn, Mw, MWD, %H Ar, Tg, Ts of resin]

The number-average molecular weight (Mn), weight-average molecular weight (Mw), molecular weight distribution (MWD), %H Ar, glass transition temperature (Tg), and softening point (Ts) of each resin listed in Table 1 were measured by the following methods.

(Number-average molecular weight, weight-average molecular weight, molecular weight distribution)

A sample was prepared by dissolving about 2.5 mg of the resin component in 10 mL of tetrahydrofuran. Using the obtained sample, the average molecular weight of the hydrogenated resin was measured by gel permeation chromatography (GPC) under the following conditions to calculate the polystyrene equivalent number-average molecular weight (Mn) and weight-average molecular weight (Mw). MWD was calculated by Mw/Mn.

- Column temperature: 40 °C
- Injection volume: 50 $\mu$L
- Carrier and flow rate: Tetrahydrofuran 0.6 mL/min

(%H Ar)

20 mg $\pm$ 1 mg of the resin was dissolved in $CDCl_3$ with deuteration ratio of 100 % (0.7 mL) and $^1$H NMR was measured at 25 °C with 32 scans using NMR of 500 MHz manufactured by Bruker. The % H Ar was calculated as [(integral value from 8.5 ppm to 6.2 ppm) / (integral value from 8.5 ppm to 0 ppm)] $\times$ 100 when the signal of the internal standard $[Si(CH_3)_3]O$ was set to 0 ppm.

(Glass transition temperature)

The glass transition temperature of the resin was measured by differential scanning calorimeter (DSC).

Specifically, in accordance with ISO 22768:2006, a differential scanning calorimeter "DSC2500" manufactured by TA Instruments Japan Inc. was used to record a DSC curve while heating from -100 °C at 10 °C/min under a helium flow of 50 mL/min, and the peak top (inflection point) of the DSC differential curve was taken as the glass transition temperature.

(Softening point)

The softening point of the resin was measured in accordance with JIS-K2207-1996 (ring-and-ball method).

[Evaluation of cold flow resistance of polymer composition]

Generally, the cold flow resistance is evaluated using T80, which is an 80 % relaxation value of torque ($ML_{1+4}$) when the torque is applied to the polymer composition for 4 minutes by rotating a rotor starting from 1 minute after preheating. However, when the relaxation was slow and no difference in T80 was observed even when the upper limit of the measurement time (4 minutes = 240 seconds) was reached, evaluation was also performed based on the attenuation rate 120 seconds after rotation was stopped (attenuation rate @ 120 seconds). In this manner, the cold flow resistance was evaluated from multiple aspects.

1. Evaluation of cold flow resistance from viewpoint of T80

In accordance with JIS K-6300-1:2001, the polymer composition was heated at a test temperature of 80 °C, with an L-shaped rotor having a preheating time of 1 minute and a rotor rotation time of 4 minutes to measure $ML_{1+4}$. The measurement device was a Mooney Viscometer "SMV-300RT" manufactured by Shimadzu Corporation.

The rotation of the L-shaped rotor was stopped immediately after the $ML_{1+4}$ measurement, and the time (in seconds) required for the $ML_{1+4}$ value to be reduced by 80 % was defined as T80.

In Table 1, T80 of Comparative Example 1 was set to 100, and the T80 values of the examples and comparative examples were indexed, and in Table 2, T80 of Comparative Example 3 was set to 100, and the T80 values of the examples and comparative examples were indexed for listing.

A larger index value of T80 indicates a better cold flow resistance of the polymer composition from the viewpoint of T80.

2. Evaluation of cold flow resistance from viewpoint of attenuation rate @ 120 sec

$ML_{1+4}$ was measured using a Mooney Viscometer "SMV-300RT" manufactured by Shimadzu Corporation under the following conditions.

Rotor size: L type
Test temperature: 80 °C
Preheating time: 1 minute
Testing time: 4 minutes
After time: 4 minutes

The attenuation rate @ 120 sec [%] was calculated by stopping the rotation of the L-shaped rotor immediately after measuring $ML_{1+4}$ and using the $ML_{1+4}$ value at the time when the rotation stopped and the $ML_{1+4}$ value 120 seconds after the rotation stopped, according to the following formula.

$$\text{Attenuation rate @ 120 sec [\%]}$$
$$= 100 \times [(ML_{1+4} \text{ value when rotation stops}) - (ML_{1+4} \text{ value after 120 sec})] / ML_{1+4} \text{ value when rotation stops}$$

In Table 1, the attenuation rate @ 120 sec of Comparative Example 1 was set to 100, and the attenuation rates @ 120 sec of the examples and comparative examples were indexed, and in Table 2, the attenuation rate @ 120 sec of Comparative Example 3 was set to 100, and the attenuation rates @ 120 sec of the examples and comparative examples were indexed for listing.

A smaller attenuation rate @ 120 sec index indicates that the polymer composition has better cold flow resistance in terms of attenuation rate @ 120 sec.

[Table 1]

| Composition | Modified SBR | St | Vi | Mn | Tg | | | Comp. Ex. 1 | Comp. Ex. 2 | Ex. 1 | Ex. 2 |
|---|---|---|---|---|---|---|---|---|---|---|---|
| | | mol% | mol% | g/mol | °C | | | | | | |
| | | 11 | 47 | 612K | -54 | | | 100 | 100 | 100 | 100 |
| | | Mn | Mw | MWD | %H Ar | Tg | Ts | - | - | - | - |
| | | g/mol | g/mol | - | % | °C | °C | - | - | - | - |
| | Oil | - | - | - | - | - | - | 50 | 0 | 0 | 0 |
| | C5 resin | 684 | 3939 | 5.76 | 0.45 | 48 | 100 | 0 | 50 | 0 | 0 |
| | α-methylstyrene | - | - | - | 54.25 | 90 | 140 | 0 | 0 | 50 | 0 |
| | homopolymer-based resin of styrenic monomer | 886 | 1605 | 1.81 | 31.60 | 70 | 120 | 0 | 0 | 0 | 50 |
| Evaluation | Cold flow resistance (attenuation rate @120 sec (index)) | | | | | | | 100 | 101 | 91 | 87 |
| | Cold flow resistance (T80 (index)) | | | | | | | 100 | 47 | 246 | 341 |

[Table 2]

| Composition | Unmodified SBR | St | Vi | Mn | Tg | | | Comp. Ex. 3 | Comp. Ex. 4 | Comp. Ex. 5 | Ex. 3 | Ex. 4 |
|---|---|---|---|---|---|---|---|---|---|---|---|---|
| | | mol% | mol% | g/mol | °C | | | | | | | |
| | | 11 | 45 | 1140K | -55 | | | 100 | 100 | 100 | 100 | 100 |
| | | Mn | Mw | MWD | %H Ar | Tg | Ts | - | - | - | - | - |
| | | g/mol | g/mol | - | % | °C | °C | - | - | - | - | - |
| | Oil | - | - | - | - | - | - | 50 | 0 | 0 | 0 | 0 |
| | C5C9-based resin | 829 | 2360 | 2.8 | 29.80 | 50 | 100 | 0 | 50 | 0 | 0 | 0 |
| | C5 resin | 684 | 3939 | 5.76 | 0.45 | 48 | 100 | 0 | 0 | 50 | 0 | 0 |
| | α-methylstyrene | - | - | - | 54.25 | 90 | 140 | 0 | 0 | 0 | 50 | 0 |
| | homopolymer-based resin of styrenic monomer | 886 | 1605 | 1.81 | 31.60 | 70 | 120 | 0 | 0 | 0 | 0 | 50 |
| Evaluation | Cold flow resistance (attenuation rate @120 sec (index)) | | | | | | | 100 | 97 | 102 | 81 | 92 |
| | Cold flow resistance (T80 (index)) | | | | | | | 100 | over 110 | 107 | over 110 | over 110 |

The results of the examples and comparative examples listed in Tables 1 and 2 indicate that the polymer composition according to the present disclosure exhibits excellent cold flow resistance in terms of both T80 and attenuation rate @ 120 sec.

On the other hand, most of the comparative polymer compositions without the resin in the present disclosure had insufficient cold flow resistance in terms of T80 (Comparative Examples 1-3 and 5). The polymer composition of Comparative Example 4 had excellent cold flow resistance in terms of T80, but insufficient cold flow resistance in terms of attenuation rate @ 120 sec.

INDUSTRIAL APPLICABILITY

The polymer composition in the present disclosure can be suitably used as a component of a rubber composition, which can be suitably used for various vulcanized rubber articles such as hoses and belts as well as tires for passenger vehicles and trucks.

Claims

1. A polymer composition comprising:

a diene-based polymer having a number-average molecular weight of 500,000 g/mol or more and
a resin having a %H Ar value of 20 % or more and a softening point of 110 °C or higher, wherein
a content of the resin is 20 parts by mass or more with respect to 100 parts by mass of the diene-based polymer.

2. The polymer composition according to claim 1, wherein the diene-based polymer comprises styrene-butadiene copolymer rubber.

3. The polymer composition according to claim 1 or 2, wherein a glass transition temperature of the diene-based polymer is -30 °C or lower.

4. The polymer composition according to claim 1 or 2, wherein the diene-based polymer is modified.

5. The polymer composition according to claim 1 or 2, wherein the resin includes at least one selected from the group consisting of $C_9$-based resin and terpene-aromatic compound-based resin.

6. The polymer composition according to claim 5, wherein the resin includes at least one selected from the group consisting of homopolymer-based resin of styrenic monomer and terpene phenolic resin.

7. The polymer composition according to claim 1 or 2, wherein a glass transition temperature of the resin is 65 °C or higher.

8. The polymer composition according to claim 1 or 2, wherein a number-average molecular weight of the resin is 300 g/mol or more.

9. The polymer composition according to claim 3, wherein a glass transition temperature of the diene-based polymer is -60 °C or lower.

10. The polymer composition according to claim 1 or 2, wherein an oil content is 0 mass%.

11. A method for producing a polymer composition comprising mixing a diene-based polymer having a number-average molecular weight of 500,000 g/mol or more and

a resin having a %H Ar value of 20 % or more and a softening point of 110 °C or higher, wherein
a compounding amount of the resin is 20 parts by mass or more with respect to 100 parts by mass of the diene-based polymer.

12. A rubber composition comprising the polymer composition according to claim 1 or 2.

13. A tire using the rubber composition according to claim 12.

**EP 4 553 112 A1**

| INTERNATIONAL SEARCH REPORT | | International application No. |
|---|---|---|
| | | **PCT/JP2023/024828** |

**A. CLASSIFICATION OF SUBJECT MATTER**

*C08L 15/00*(2006.01)i; *B60C 1/00*(2006.01)i; *C08L 9/06*(2006.01)i; *C08L 25/02*(2006.01)i; *C08L 65/00*(2006.01)i
FI: C08L15/00; C08L9/06; C08L25/02; C08L65/00; B60C1/00 Z

According to International Patent Classification (IPC) or to both national classification and IPC

**B. FIELDS SEARCHED**

Minimum documentation searched (classification system followed by classification symbols)

C08L1/00-101/14; C08K3/00-13/08; B60C1/00-19/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-088897 A (SUMITOMO RUBBER IND) 25 May 2017 (2017-05-25)<br>claims 1, 8-9, paragraphs [0021], [0052], [0059]-[0061], [0151]-[0152], [0161], [0173],<br>tables 1, 6-1, production examples A, J, examples 1-8 | 1-13 |
| X | JP 2016-089118 A (YOKOHAMA RUBBER CO LTD) 23 May 2016 (2016-05-23)<br>claim 1, paragraphs [0054], [0065]-[0066], [0089]-[0104], tables 1-3, example 3 | 1, 3-9, 11-13 |
| A | | 2, 10 |
| A | WO 2012/165038 A1 (SUMITOMO RUBBER IND) 06 December 2012 (2012-12-06)<br>entire text | 1-13 |
| A | JP 2013-256585 A (SUMITOMO RUBBER IND) 26 December 2013 (2013-12-26)<br>entire text | 1-13 |
| A | JP 2019-123760 A (SUMITOMO RUBBER IND) 25 July 2019 (2019-07-25)<br>entire text | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/024828**

**INTERNATIONAL SEARCH REPORT**
**Information on patent family members**

| Patent document cited in search report | | | Publication date (day/month/year) | Patent family member(s) | | | Publication date (day/month/year) |
|---|---|---|---|---|---|---|---|
| JP | 2017-088897 | A | 25 May 2017 | (Family: none) | | | |
| JP | 2016-089118 | A | 23 May 2016 | (Family: none) | | | |
| WO | 2012/165038 | A1 | 06 December 2012 | US<br>entire text<br>EP<br>CN<br>BR | 2014/0011944<br><br>2712890<br>103562295<br>112013030711 | A1<br><br>A1<br>A<br>A | |
| JP | 2013-256585 | A | 26 December 2013 | US<br>entire text<br>CN | 2013/0331498<br><br>103483636 | A1<br><br>A | |
| JP | 2019-123760 | A | 25 July 2019 | EP<br>entire text<br>CN | 3511179<br><br>110028711 | A1<br><br>A | |

Form PCT/ISA/210 (patent family annex) (January 2015)

**REFERENCES CITED IN THE DESCRIPTION**

**Patent documents cited in the description**

• JP 2020528487 A